# EUROPÄISCHE PATENTSCHRIFT

(11) **EP 2 617 113 B1**
(45) Veröffentlichungstag und Bekanntmachung des Hinweises auf die Patenterteilung: **16.07.2014**
(21) Anmeldenummer: 11788354.6
(22) Anmeldetag: 31.08.2011
(51) Int. Cl.: F16L 25/01, H01B 7/42, H02G 15/22

(54) **LEITUNGSANORDNUNG SOWIE VERFAHREN ZU DEREN HERSTELLUNG**
PIPE ARRANGEMENT AND METHOD FOR PRODUCING SAME
ENSEMBLE CONDUITE ET SON PROCÉDÉ DE PRODUCTION

(30) Priorität: 15.09.2010 DE 102010045522
(43) Veröffentlichungstag der Anmeldung: 24.07.2013
(73) Patentinhaber: Schlögl, Hilde, 92533 Wernberg (DE)
(72) Erfinder: SCHLÖGL, Gerhard, 92533 Wernberg (DE)
(74) Vertreter: Graf Glück Kritzenberger
(86) Internationale Anmeldenummer: PCT/DE2011/001673
(87) Internationale Veröffentlichungsnummer: WO 2012/034553

(56) Entgegenhaltungen:
- EP-A1- 0 593 344
- DE-C1- 19 740 912

## Beschreibung

Die Erfindung betrifft eine Leitungsanordnung zur Übertragung elektrischer Energie und eines unter Druck stehenden Fluids gemäß dem Oberbegriff des Patentanspruches 1 sowie ein Verfahren zur Herstellung einer derartigen Leitungsanordnung gemäß dem Oberbegriff des Patentanspruches 8.

Im Bereich der Kraftfahrzeuge, Nutzfahrzeuge, Bau- und Landmaschinen erfolgt bislang die Energieübertragung hoher Leistungen über hydraulische und/oder mechanische Konzepte. Zunehmend gibt es Bestrebungen, beim Fahrantrieb sowie beim Antrieb von Nebenaggregaten Elektromotore einzusetzen, deren elektrische Energie von einem Generator bereitgestellt wird, der durch einen Verbrennungsmotor angetrieben wird. Hierzu ist es notwendig am Fahrzeug ein elektrisches Netz vorzusehen, an das beliebige elektrische Erzeuger und Verbraucher wie beispielsweise Generator, Fahrantrieb, Nebenantriebe oder elektrisch angetriebene Arbeitsgeräte angekoppelt werden können.

Insbesondere bei Nutzfahrzeugen ist es notwendig, dass die Antriebe eine hohe Leistung besitzen, so dass in dem elektrischen Netz hohe elektrische Leistungen übertragen werden müssen. Unter hohen elektrischen Leistungen werden im Rahmen dieser Erfindung insbesondere Leistungen im Bereich von 50KW bis 300KW bei einer elektrischen Stromstärke von 50A bis 400A verstanden. In diesem Leistungsbereich stellt die Ableitung der in den Antrieben entstehenden Wärme ein zentrales Problem dar.

Zur optimalen Wärmeableitung sind insbesondere flüssigkeitsgekühlte elektrische Antriebe bekannt geworden, deren Innenraum zur Ableitung der Wärme von einem Fluid durchflossen wird. Durch die Flüssigkeitskühlung der Antriebe wird eine äußerst kompakte Bauform der selbigen ermöglicht. Im Falle von mehreren, verteilt am Fahrzeug oder an Anbaugeräten des Fahrzeugs vorgesehenen Antrieben ist es vorteilhaft, einen Kühlmittelkreislauf mit einer zentralen Pumpe und einem zentralen Kühler vorzusehen, an den die einzelnen Antriebe bzw. Verbraucher angeschlossen werden.

Aus der EP 0 593 344 A1 ist eine Kupplung für Leitungen zur Übertragung elektrischer Energie hoher Leistung bekannt, bei dem die elektrischen Leiter der Leitungen in einem Fluid aufweisenden Innenraum einer Umhüllung aufgenommen sind.

Die DE 197 40 912 C1 beschreibt die Herstellung eines flexiblen, mit Kühlmittel durchströmbaren Kabelstückes, bei dem ein Schlauch mit einer Schlauchwandung und einem Schlauchinnenraum bereitgestellt wird. Im Schlauchinnenraum ist zumindest ein Stromband geführt, an dessen freien Ende zumindest eine Kontakthülse vorgesehen ist. Ferner ist freiendseitig an der Schlauchwandung ein Koppelring vorgesehen.

Ausgehend hiervon liegt der Erfindung die Aufgabe zugrunde, eine Leitungsanordnung anzugeben, die einfach und kostengünstig herstellbar ist, die eine möglichst kompakte Bauform aufweist und gleichzeitig eine Übertragung elektrischer Energie hoher Leistung und eines unter Druck stehenden Fluids ermöglicht. Die Aufgabe wird ausgehend von den Oberbegriffen der Patentansprüche 1 und 8 jeweils durch deren kennzeichnende Merkmale gelöst.

Der wesentliche Aspekt der erfindungsgemäßen Leitungsanordnung, die einen Schlauch mit einem Schlauchinnenraum, einen elektrischen Leiter, zumindest ein Schlauchabschlusselement und zumindest ein elektrisch leitfähiges Leiterabschlusselement umfasst, besteht darin, dass der elektrische Leiter zumindest teilweise im Schlauchinnenraum aufgenommen ist, dass im Schlauchinnenraum ein Fluidkanal ausgebildet ist, dass das Leiterabschlusselement freiendseitig am elektrischen Leiter angeordnet und beabstandet zum Schlauchabschlusselement im Schlauchabschlusselementinnenraum befestigt ist und dass zumindest im Übergangsbereich zwischen elektrischem Leiter und Leiterabschlusselement Isolationsmittel vorgesehen sind, die den elektrischen Leiter und das Leiterabschlusselement umfangsseitig umschließen. Der wesentliche Vorteil der erfindungsgemäßen Leitungsanordnung besteht zum einen in der hohen elektrischen Isolationswirkung der berührbaren Teile, insbesondere des Schlauchabschlusselements gegenüber dem die elektrische Energie führenden elektrischen Leiter, zum anderen ergeben sich eine Reihe von Vorteilen aus der Anordnung des elektrischen Leiters im Inneren des vom Fluid durchflossenen Schlauch, nämlich zum einen der Vorteil einer hohen Wärmeableitung der im elektrischen Leiter entstehenden Wärme durch das Umfließen desselben mit einem Fluid, so dass der Querschnitt des elektrischen Leiters minimiert werden kann, zum anderen der Vorteil einer optischen Prüfungsmöglichkeit der Leitungsanordnung dadurch, dass bei einer Verletzung der Schlauchwandung das unter Druck stehende Fluid austritt und dadurch einen Hinweis auf eine möglicherweise auch verletzte Isolation der Leitungsanordnung gegeben ist.

In einem weiteren bevorzugten Ausführungsbeispiel weist der elektrische Leiter zumindest einen elektrisch leitenden Kern in Form einer Litze oder eines Drahtes und einen diesen Kern umgebende, fluidresistente Isolierung auf. Durch das Vorsehen eines elektrisch isolierten Leiters im Inneren des Schlauchs ist es möglich, dass der elektrische Leiter, abgesehen von den freien Enden, an denen dieser zentriert im Schlauch gehalten wird, frei im Schlauch beweglich ist, sodass durch die elektrische Isolierung keine Notwendigkeit einer zumindest abschnittsweise gestützten Aufnahme des elektrischen Leiters im Schlauchinnenraum besteht. Dadurch wird eine kostengünstige Herstellung der Leitungsanordnung erreicht.

In einem weiteren bevorzugten Ausführungsbeispiel wird als Schlauch ein druckbeständiger Schlauch mit einer Schlauchwandung verwendet, die ein elektrisch leitfähiges Gewebe beinhaltet. Durch die Verwendung eines Gewebes wird eine hohe Stabilität des Schlauchs erreicht, wobei beim Vorsehen eines elektrisch leitfähigen Gewebes, beispielsweise eines metallischen Gewebes durch dieses die Möglichkeit besteht, dass der elektrische Leiter abgeschirmt durch das elektrisch leitfähige Gewebe im Schlauch geführt ist, sodass durch Strom- bzw. Spannungsschwankungen auftretende elektromagnetische Strahlung durch das Gewebe abgeschirmt wird und nicht in die Umgebung abgestrahlt werden kann. Dadurch wird eine hohe elektromagnetische Verträglichkeit bewirkt.

In einem weiteren bevorzugten Ausführungsbeispiel ist das Schlauchabschlusselement elektrisch leitfähig und elektrisch leitend mit dem Gewebe des Schlauchs verbunden. Dadurch wird erreicht, dass bei Anschluss der Leitungsanordnung beispielsweise an einem Motor oder Generator, dessen Gehäuse auf Massepotential liegt, dieses Massepotential über das Schlauchabschlusselement hinweg auf das Gewebe des Schlauchs übertragen wird und damit ein elektrischer Schutzschirm, der beispielsweise Massepotential aufweist, die gesamte Leitungsanordnung umgibt.

Besonders bevorzugt ist das Schlauchabschlusselement zumindest abschnittsweise als Presshülse ausgebildet. Dadurch kann eine einfache und kostengünstige Verbindung des Schlauchs, der vorzugsweise ein Hydraulikschlauch sein kann, mit dem Schlauchabschlusselement erreicht werden, und zwar nicht nur eine mechanisch hoch belastbare, sondern gleichzeitig eine fluiddichte Verbindung.

In einem weiteren bevorzugten Ausführungsbeispiel werden die im Übergangsbereich zwischen dem elektrischen Leiter und dem Leiterabschlusselement vorgesehenen elektrischen Isolationsmittel durch einen Schrumpfschlauch oder ein Formstück, beispielsweise ein gespritztes Formstück gebildet. Infolge der Biegbarkeit der Leitungsanordnung und der freien Beweglichkeit des elektrischen Leiters im Schlauch unterliegt der elektrische Leiter insbesondere am Übergang zum Leiterabschlusselement, in dem der Kern des elektrischen Leiters beispielsweise durch Crimpen oder Löten befestigt ist, erhöhten mechanischen Belastungen. Das Vorsehen von Isolationsmittel an diesem Übergang bewirkt zum einen einen nahezu stetigen Steifigkeitsübergang zwischen dem im Schlauchabschlusselement festgelegten Leiterabschlusselement und dem im Schlauch frei beweglichen elektrischen Leiter, so dass die mechanische Belastung im Übergang zwischen elektrischem Leiter und dem Leiterabschlusselement minimiert bzw. die mechanische Stabilität durch die Isolationsmittel erhöht wird, zum anderen wird eine kostengünstige und einfache elektrische Nachisolierung dieses Übergangsbereichs zur Erhöhung der Isolationswirkung des elektrischen Leiters bzw. des Leiterabschlusselements gegenüber dem auf Massepotential befindlichen Schlauchabschlusselement gewährleistet. Dies ist insbesondere bei als Winkelstück ausgebildetem Schlauchabschlusselement von Vorteil.

In einem weiteren bevorzugten Ausführungsbeispiel ist das Leiterabschlusselement durch ein elektrisch nicht leitendes Isolierelement zentriert im Schlauchabschlusselement gehalten, das Fluidkanäle zum Durchfluss des Fluids in axialer Richtung des Leiterabschlusselements ermöglicht. Durch die Verwendung eines Isolierelements wird zum einen eine einfache und kostengünstige ortsfeste Fixierung des Leiterabschlusselements gegenüber dem Schlauchabschlusselement gegeben, zum anderen kann dadurch eine hohe Isolationswirkung des Leiterabschlusselements gegenüber dem auf Massepotential befindlichen Schlauchabschlusselement erreicht werden.

Besonders bevorzugt ist das leiterabschlusselement lösbar gegenüber dem Isolierelement und das Isolierelement lösbar gegenüber dem Schlauchabschlusselement befestigt, wobei die Befestigung vorzugsweise durch Sicherungsmittel beispielsweise Sicherungsringe erfolgt. Dadurch können eine kostengünstige Montage des Leiterabschlusselements im Schlauchabschlusselement und eine vereinfachte Wartung bzw. Reparatur der Leitungsanordnung erfolgen.

Ein weiterer Aspekt der Erfindung betrifft ein Verfahren zur Herstellung einer Leitungsanordnung zur Übertragung elektrischer Energie hoher Leistung und eines unter Druck stehenden Fluids umfassend das Bereitstellen eines Schlauchs mit einer Schlauchwandung und einem Schlauchinnenraum, zumindest eines elektrischen Leiters, zumindest eines Schlauchabschlusselements und zumindest eines elektrisch leitfähigen Leiterabschlusselements, wobei das Leiterabschlusselement am freien Ende des elektrischen Leiters und das Schlauchabschlusselement freiendseitig an der Schlauchwandung angeordnet wird, der elektrische Leiter in den Schlauchinnenraum eingebracht wird und das Leiterabschlusselement beabstandet zum Schlauchabschlusselement im Schlauchabschlusselementinnenraum angeordnet wird. Dadurch kann einfach und kostengünstig eine Leitungsanordnung zur Übertragung hoher elektrischer Energie und eines unter Druck stehenden Fluids hergestellt werden.

In einem bevorzugten Ausführungsbeispiel wird das Leiterabschlusselement lösbar mit dem Schlauchabschlusselement verbunden. Dadurch werden eine vereinfachte Montage und eine verbesserte Wartbarkeit der Leitungsanordnung erreicht.

In einem besonders bevorzugten Ausführungsbeispiel wird der elektrische Leiter auf eine Länge größer der Länge des Schlauchs abgelängt. Dadurch wird die Montage des

Leiterabschlusselements im Schlauchabschlusselement durch das Isolierelement wesentlich vereinfacht, da nach der Montage bzw. Fixierung des ersten Leiterabschlusselements mittels des Isolierelements im Schlauchabschlusselement das zweite, am gegenüber liegenden Ende der Leitungsanordnung vorgesehene Leitungsabschlusselernent geringfügig über das Schlauchabschlusselement übersteht, so dass dessen freies Ende leicht ergriffen werden kann und keine Gefahr besteht, dass sich dieses in den Schlauchinnenraum bzw. das Schlauchabschlusselement zurückzieht.

In einem weiteren bevorzugten Ausführungsbeispiel wird der Übergangsbereich zwischen dem elektrischen Leiter und dem Leiterabschlusselement umfangsseitig beispielsweise durch einen Schrumpfschlauch nachisoliert, sodass sich eine erhöhte Isolationswirkung der spannungsführenden Teile gegenüber dem auf Massepotential befindlichen, benachbarten Schlauchabschlusselement und ein nahezu stetiger Steifigkeitsübergang zwischen dem im Schlauchabschlusselement festgelegten Leiterabschlusselement und dem im Schlauch frei beweglichen elektrischen Leiter ergibt.

Zudem ergeben sich Weiterbildungen, Vorteile und Anwendungsmöglichkeiten der Erfindung auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht. Es zeigen:
- Fig. 1: beispielhaft eine erfindungsgemäße Leitungsanordnung in einer perspektivischen Ausschnittsdarstellung;
- Fig. 2: beispielhaft eine Draufsichtsdarstellung auf das freie Ende einer erfindungsgemäßen Leitungsanordnung;
- Fig. 3: beispielhaft eine erfindungsgemäße Leitungsanordnung in einer Seitenansicht;
- Fig. 4: beispielhaft eine erfindungsgemäße Leitungsanordnung in einer seitlichen Schnittdarstellung entlang der Schnittlinie A-A gemäß Figur 3;

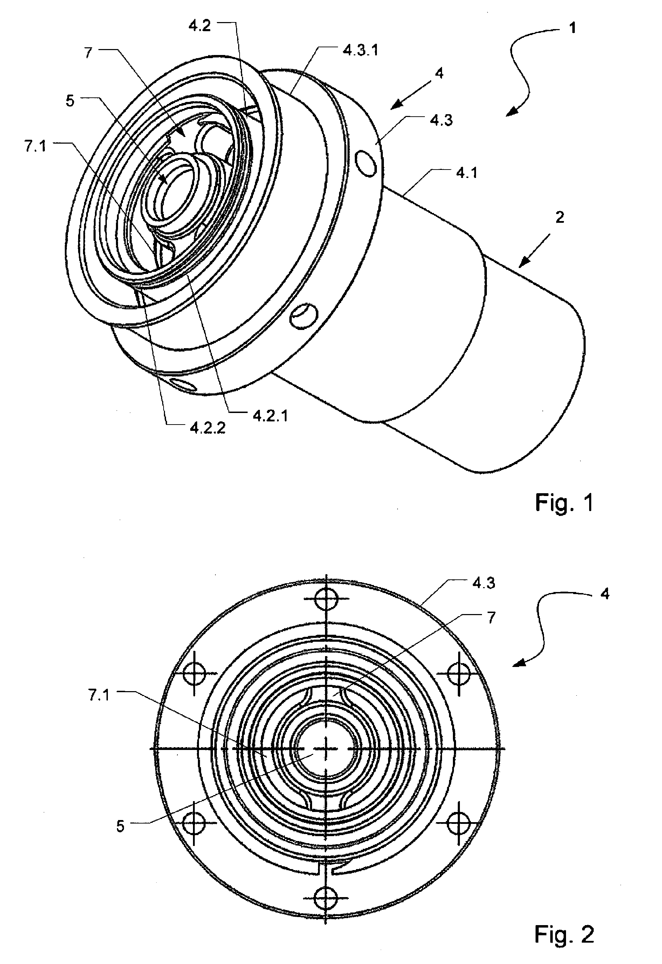

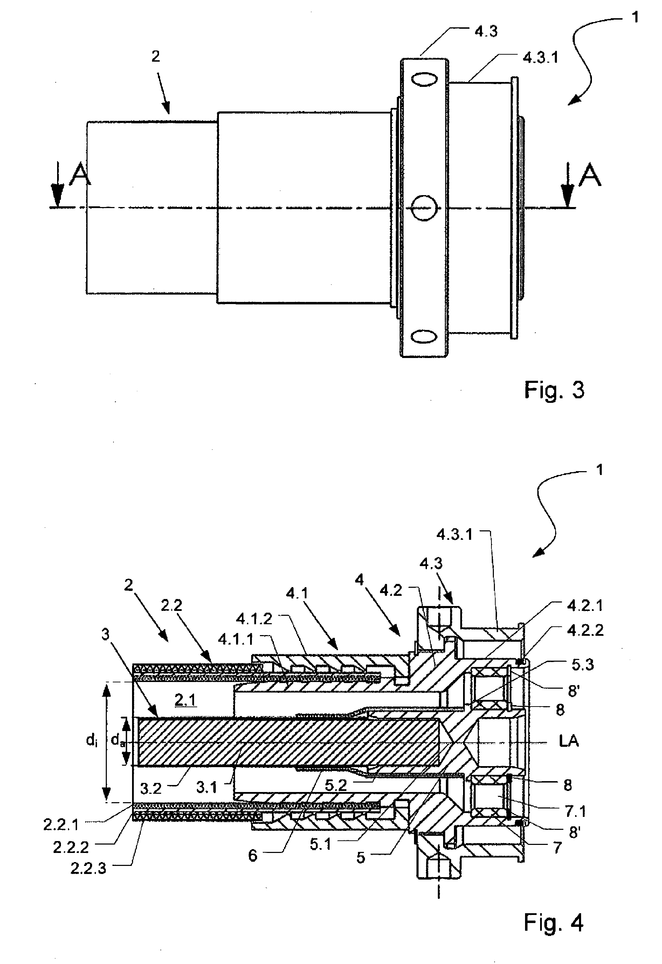

In den Figuren 1 - 4 ist jeweils mit dem Bezugszeigen 1 eine erfindungsgemäße Leitungsanordnung in Ausschnittsdarstellungen gezeigt. Die Leitungsanordnung 1, die zur Übertragung elektrischer Energie hoher Leistung und eines unter Druck stehenden Fluids ausgebildet ist, besteht im Wesentlichen aus einer durch einen Schlauch 2 mit einem Schlauchinnenraum 2.1 als Fluidkanal und einem im Schlauchinnenraum 2.1 aufgenommenen elektrischen Leiter 3 gebildeten Leitung, die zumindest an einem freiendseitigen Ende einen Leitungsabschluss aufweist, der durch ein Schlauchabschlusselement 4 und ein elektrisch leitfähiges Leiterabschlusselement 5 gebildet wird.

Erfindungsgemäß ist der elektrische Leiter 3 zumindest teilweise im Schlauchinnenraum 2.1 aufgenommen, im Schlauchinnenraum 2.1 ist ein Fluidkanal ausgebildet, das Leiterabschlusselement 5 ist freiendseitig am elektrischen Leiter 3 angeordnet und beabstandet zum Schlauchabschlusselement 4 im Schlauchabschlusselementinnenraum befestigt und zumindest im Übergangsbereich zwischen elektrischem Leiter 3 und Leiterabschlusselement 5 sind Isolationsmittel 6 vorgesehen, die den elektrischen Leiter 3 und das Leiterabschlusselement 5 umfangsseitig umschließen. Ein wesentlicher Vorteil der erfindungsgemäßen Leitungsanordnung 1 besteht im kompakten Aufbau und der gleichzeitigen Übertragung elektrischer Energie hoher Leistung bzw. eines Fluids. Dieses Fluid trägt durch die Ausbildung des Fluidkanals um den elektrischen Leiter 3 zur Kühlung desselben bei, sodass der Querschnitt des elektrisch leitfähigen Kerns 3.1 des elektrischen Leiters 3 aufgrund der hohen Wärmeableitung durch das den elektrischen Leiter 3 umgebende Fluid im Querschnitt kleiner dimensioniert werden kann als im Falle eines ungekühlten elektrischen Leiters 3. Zudem ergibt sich durch das Umgeben des elektrischen Leiters durch den Fluidkanal eine optische Isolationsüberprüfung, da bei der Verletzung des Schlauchs ein Austritt des Fluids auftritt, und dadurch auf einen Hinweis auf einen möglichen Isolationsmangel liefert.

Der die Leitung nach außen hin begrenzende Schlauch 2 weist eine mehrschichtig aufgebaute Schlauchwandung 2.2 beispielsweise mit einem runden oder polygonen Querschnitt auf. Die den Schlauchinnenraum 2.1 begrenzende erste Schlauchwandungsschicht 2.2.1 wird durch einen formfesten, elastisch verformbaren Kunststoff, beispielsweise einem Elastomer gebildet, der fluidresistent im Bezug auf das im Schlauchinnenraum 2.1 zu übertragende Fluid ist. Als Fluid kann beispielsweise ein flüssiges Kühlmittel oder ein Öl, insbesondere ein Isolieröl übertragen werden.

An die erste Schlauchwandungsschicht 2.2.1 schließt sich nach außen hin eine zweite Schlauchwandungsschicht 2.2.2 an, die durch ein elektrisch leitfähiges Gewebe, insbesondere ein metallisches Gewebe gebildet wird. Das Gewebe dient zum einen der Stabilisierung des Schlauchs 2, um im Schlauchinnenraum 2.1 ein unter Druck stehendes Fluid übertragen zu können, zum anderen wird durch das elektrisch leitfähige Gewebe zwischen den an die Leitungsanordnung 1 angeschlossenen Komponenten ein einheitliches Massepotential hergestellt, das zudem als Abschirmung gegen die Abstrahlung von elektromagnetischer Strahlung, die durch Strom- bzw. Spannungsschwankungen auf dem elektrischen Leiter 3 entsteht, dient.

An die zweite Schlauchwandungsschicht 2.2.2 schließt sich vorzugsweise außenseitig eine dritte Schlauchwancfungsschicht 2.2.3 an, die beispielsweise wiederum aus einem elastisch verformbaren Kunststoff, insbesondere einem Elastomer gebildet wird und als Schutzschicht für die darunter liegende erste und zweite Schlauchwandungsschicht 2.2.1, 2.2.2 fungiert.

Besonders bevorzugt wird als Schlauch 2 ein aus ersten bis dritten Schlauchwandungsschichten 2.2.1, 2.2.2, 2.2.3 bestehender Hydraulikschlauch verwendet. Diese Schläuche 2 zeichnen sich zum einen durch eine hohe Stabilität gegen äußere Einwirkung aus, zum anderen können mit Hydraulikschläuchen Fluide unter hohem Druck übertragen werden, sodass je nach Anwendungsbereich ein hoher Fluiddurchfluß und damit eine hohe Kühlung des elektrischen Leiters 3 erreicht wird.

In einem bevorzugten Ausführungsbeispiel besteht der elektrische Leiter 3 aus einem elektrisch leitenden Kern 3.1 beispielsweise in Form einer Litze oder eines Volldrahtes, wobei aufgrund des zur Übertragung elektrischer Energie hoher Leistung benötigten Leiterquerschnitts im Bereich von 50 mm² bis 150 mm², vorzugsweise etwa 100 mm², die Verwendung einer Litze bevorzugt ist. Der Kern 3.1 des elektrischen Leiters 3 ist außenumfangsseitig von einer elektrisch nicht leitenden Isolierung 3.2 umgeben, die beispielsweise durch einen elastisch verformbaren Kunststoff gebildet ist. Diese Isolierung 3.2 ist bevorzugt fluidresistent ausgebildet, sodass der elektrische Leiter 3, dessen Außendurchmesser dₐ kleiner als der Innendurchmesser dᵢ des Schlauchinnenraums 2.1 ist, frei beweglich, d.h. nicht zumindest abschnittsweise durch Abstandshalter im Schlauch 2 getragen, sondern im Schlauch 2 lediglich durch einfaches Einziehen aufgenommen werden kann, wobei durch die Isolierung 3.2 und die erste Schlauchwandungsschicht 2.2.1 eine ausreichende elektrische Isolierung des hohe Spannungen bzw. hohe Ströme übertragenden Kerns 3.1 der elektrischen Leitung 3 gegenüber dem elektrisch leitfähigen, die zweite Schlauchwandungsschicht 2.2.2 bildenden Gewebe gewährleistet ist.

Aufgrund des geringeren Außendurchmessers dades elektrischen Leiters 3 im Vergleich zum Innendurchmesser dᵢ des Schlauchs 2 ergibt sich um den elektrischen Leiter 3 herum im Schlauchinnenraum 2.1 ein durchgängiger Fluidkanal, der von dem unter Druck stehenden Fluid durchflossen werden kann.

Zumindest an einem freien Ende, bevorzugt an beiden freien Enden der Leitung sind Leitungsabschlusselemente vorgesehen, die im gezeigten Ausführungsbeispiel im Wesentlichen durch das Schlauchabschlusselement 4 und das Leiterabschlusselement 5 gebildet sind. Das Schlauchabschlusselement 4 ist hülsenförmig ausgebildet und weist einen Befestigungsabschnitt auf, mittels dem das Schlauchabschlusselement 4 flüssigkeitsdicht gegenüber der Schlauchwandung 2.2 des Schlauchs 2 festlegbar ist. Der Befestigungsabschnitt wird im gezeigten Ausführungsbeispiel durch den Presshülsenabschnitt 4.1 gebildet, der aus einem inneren Hülsenabschnitt 4.1.1 und einer äußeren, mit dem inneren Hülsenabschnitt 4.1.1 zu verpressenden Presshülse 4.1.2 besteht. Vor dem Verpressen der Presshülse 4.1.2 gegenüber dem Hülsenabschnitt 4.1.1 wird zwischen der Presshülse 4.1.2 und dem Hülsenabschnitt 4.1.1 ein Ringspalt gebildet, in den das freie Ende des Schlauchs 2 eingeführt werden kann.

Vorzugsweise wird vor dem Einführen des freien Ende des Schlauchs 2 die dritte Schlauchwandungsschicht 2.2.3 entfernt, sodass die als Gewebe ausgebildete zweite Schlauchwandungsschicht 2.2 freiliegt. Dadurch wird zwischen dem elektrisch leitfähigen Gewebe und der Presshülse 4.1.2 bzw. dem Schlauchabschlusselement 4, die besonders bevorzugt elektrisch leitfähig ausgebildet sind, eine elektrisch leitfähige Verbindung hergestellt, sodass bei Anschluss des Schlauchabschlusselements 4 an eine Komponente, beispielsweise einen Motor, einen Generator, einen Verteiler oder Ähnlichem über das Schlauchabschlusselement 4 und das elektrisch leitfähige Gewebe ein einheitliches Massepotential zwischen den angeschlossenen Komponenten hergestellt wird. Besonders bevorzugt ist das Schlauchabschlusselement 4 metallisch, insbesondere aus vernickeltem Stahl gebildet.

An den Presshülsenabschnitt 4.1 des Schlauchabschlusselements 4 schließt sich auf die dem Schlauch 2 abgewandte Seite hin ein Verbindungsabschnitt 4.2 an, der ebenfalls im Wesentlichen hülsenförmig mit einer vorzugsweise zentrierten Innenöffnung ausgebildet ist. Dieser Verbindungsabschnitt 4.2 dient der Kopplung der Leitungsanordnung 1 mit Komponenten, an die die Leitungsanordnung 1 anschließbar ist, also beispielsweise Motoren, Generatoren, Verteiler und Ähnlichem. Der Verbindungsabschnitt 4.2 ist im gezeigten Ausführungsbeispiel steckerförmig ausgebildet, könnte aber abweichend hiervon auch als Dose, als Flansch oder ähnlichem ausbildet sein. Der Verbindungsabschnitt 4.2 weist freiendseitig eine umlaufende Dichtfläche 4.2.1 auf, an deren freiendseitigem Rand eine Dichtung 4.2.2 eingebracht ist. Diese Dichtfläche 4.2.1 bzw. Dichtung 4.2.2 dient der flüssigkeitsdichten Abdichtung des Anschlusses der Leitungsanordnung 1 an den anzuschließenden Komponenten.

Der Verbindungsabschnitt 4.2 ist außenumfangsseitig von einer Überwurfmutter umgeben, die um die Längsachse LA der Leitungsanordnung 1 drehbar am Verbindungsabschnitt 4.2 gehalten ist, und einen freiendseitig abstehenden Steg 4.3.1 mit einem der Dichtfläche 4.2.1 gegenüberliegenden Innengewinde aufweist. Mittels dieser Überwurfmutter 4.3 lässt sich das Schlauchabschlusselement 4 an der anzuschließenden Komponente durch Aufschrauben befestigen.

In der im Inneren des Schlauchabschlusselements 4 ausgebildeten Innenöffnung ist beabstandet und vorzugsweise zentriert ein Leiterabschlusselement 5 angeordnet, das mit dem Kern 3.1 des elektrischen Leiters 3 elektrisch leitfähig verbunden ist. Das Leiterabschlusselement 5 ist im Schlauchabschlusselement 4 über ein ringförmig ausgebildetes Isolierelement 7 in der Innenöffnung des Schlauchabschlusselements 4 gehalten. Hierbei weist das Isolierelement 7 einen Außendurchmesser auf, der an den Innendurchmesser der Innenöffnung des Schlauchabschlusselements 4 im Bereich des freien Endes angepasst ist. Das Isolierelement 7 besitzt ferner eine Innenöffnung, die an den Außendurchmesser des Leiterabschlusselements 5 im Bereich des vom elektrischen Leiter 3 abstehenden freien Endes angepasst ist, sodass das Leiterabschlusselement 5 abschnittsweise durch die Innenöffnung des Isolierelements 7 hindurchgeführt werden kann. Die axiale Befestigung des Leiterabschlusselements 5 gegenüber dem Schlauchabschlusselement 4 erfolgt einerseits durch das Isolierelement 7 hintergreifende Abschnitte des Leiterabschlusselements 5 bzw. des Schlauchabschlusselements 4, zur anderen Seite hin durch in das Schlauchabschlusselement 4 bzw. das Leiterabschlusselement 5 eingreifende Sicherungsmittel, beispielsweise Sicherungsringe 8, 8'. Durch die Verwendung von Sicherungsringen 8, 8' zur Befestigung des Leiterabschlusselements 5 im Schlauchabschlusselement 4 wird eine lösbare Befestigung und damit eine leichte Montage bzw. Wartung der Leitungsanordnung 1 ermöglicht.

Neben der das Leiterabschlusselement 4 aufnehmenden Innenöffnung weist das Isolierelement 7 zumindest einen, vorzugsweise mehrere Fluidkanäle 7.1 auf, die das Isolierelement 7 in axialer Richtung bezogen auf die Längsachse LA der Leitungsanordnung 1 durchdringen. Dadurch kann das im Schlauchinnenraum 2.1 geführte Fluid über die Innenöffnung des Schlauchabschlusselements 4 hinweg durch das Isolierelement 7 hindurch an die angeschlossene Komponente übertragen werden.

Das Leiterabschlusselement 5 ist im gezeigten Ausführungsbeispiel als Aderendhülse ausgebildet und weist zumindest eine dem elektrischen Leiter 3 zugewandte Innenöffnung 5.1 auf, die als Sackloch ausgebildet ist und seitlich durch Wandungsabschnitte 5.2 begrenzt ist. Die Wandungsabschnitte 5.2 sind hierbei derart ausgebildet, dass das Leiterabschlusselement 5 mit dem elektrisch leitfähigen Kern durch Krimpen mechanisch und elektrisch leitfähig verbunden werden kann.

Um eine hohe Isolierwirkung des elektrisch leitfähigen Kerns 3.1 gegenüber dem auf Massepotential befiridlichen Schlauchabschlusselement 4 zu gewährleisten, sind Isoliermittel 6 vorgesehen, die den elektrischen Leiter 3 und das Leiterabschlusselement 5 im Übergangsbereich zwischen dem elektrischen Leiter 3 und dem Leiterabschlusselement 5 zumindest abschnittsweise umgeben. Besonders bevorzugt wird als Isolationsmittel 6 ein Schrumpfschlauch verwendet. Dieser Schrumpfschlauch überzieht im gezeigten Ausführungsbeispiel an der Isolierung 3.2 des elektrischen Leiters 3 beginnend das Leiterabschlusselement 5 bis zu dem zur Fixierung gegenüber dem Isolierelement 7 vorgesehenen Vorsprung 5.3.

Im Folgenden wird das zur Herstellung der Leitungsanordnung 1 verwendete Verfahren näher beschrieben. Hierbei wird an eine durch einen Schlauch 2 und einen elektrischen Leiter 3 gebildete Leitung jeweils freiendseitig ein aus Schlauchabschlusselement 4 und Leiterabschlusselement 5 gebildeter Leitungsabschluss angebracht, sodass eine beidseitig konfektionierte Leitung hergestellt wird.

Zu Beginn des Verfahrens wird der Schlauch 2, der vorzugsweise ein elektrisch leitfähiges Gewebe als mittlere Schlauchwandungsschicht 2.2 aufweist, auf eine gewünschte Länge abgelängt. Für den Fall, dass das Gewebe außenumfangsseitig durch eine dritte Schlauchwandungsschicht 2.2.3 aus elektrisch nicht leitendem Material umgeben ist, wird diese dritte Schlauchwandungsschicht 2.2.3 über eine Teillänge, die im Wesentlichen der Längserstreckung des Presshülsenabschnitts 4.1 des Schlauchabschlusselements 4 entspricht, abgetragen bzw. abgeschliffen. Anschließend wird auf beiden Seiten das Schlauchabschlusselement 4 an der Schlauchwandung 2.2 des Schlauchs 2 befestigt, insbesondere der Presshülsenabschnitt 4.1 mit der Schlauchwandung 2.2 verpresst. Dadurch wird eine hohe mechanische Stabilität der Befestigung des Schlauchabschlusselements 4 am Schlauch 2 unter Gewährleistung der Flüssigkeitsdichtheit und der elektrisch leitenden Verbindung zwischen dem Gewebe und dem Schlauchabschlusselement 4 erreicht.

Anschließend wird der elektrische Leiter 3 auf eine Länge abgelängt, die vorzugsweise etwas größer ist als die Länge des Schlauchs 2. Der elektrische Leiter 3 wird beidseitig an den freien Enden über eine Teillänge abisoliert, dass der elektrisch leitfähige Kern 3.1 des elektrischen Leiters 3 freiliegt. Die Länge der Abisolierung entspricht hierbei vorzugsweise der Tiefe der Innenöffnung 5.1. Anschließend wird der abisolierte Kern 3.1 des elektrischen Leiters 3 in die Innenöffnung 5.1 des Leiterabschlusselements 5 eingeschoben und das Leiterabschlusselement 5 vorzugsweise durch mechanische Verformung des Wandungsabschnitts 5.2, d.h. durch Krimpen am elektrischen Leiter 3 befestigt, sodass eine kraftschlüssige, elektrisch leitfähige Verbindung zwischen dem Leiterabschlusselement 5 und dem elektrischen Leiter 3 hergestellt ist. Zur Gewährleistung einer hohen Isolierwirkung gegenüber dem Schlauchabschlusselement 4 wird das Leiterabschlusselement 5 und der elektrische Leiter 3 in dem Übergangsbereich zwischen dem elektrischen Leiter 3 und dem Leiterabschlusselement 5 durch Isoliermittel 6, die insbesondere durch einen Strumpfschlauch gebildet sind, nachisoliert. In gleicher Weise wird auf dem gegenüberliegenden freien Ende des elektrischen Leiters 3 das weitere Leiterabschlusselement 5 befestigt.

Um beim Einziehen des elektrischen Leiters 3 in den Schlauch 2 zu verhindern, dass das dem eingeschobenen freien Ende des elektrischen Leiters gegenüberliegenden freie Ende auch innerhalb des Schlauchs 2 zu liegen kommt, wird auf ein Leiterabschlusselement 5 ein Isolierelement 7 aufgeschoben und mit dem Sicherungsring 8 gesichert. Anschließend wird der elektrische Leiter 3 mit dem gegenüberliegenden freien Ende, an dem kein Isolierelement 7 befestigt ist, in den Schlauch 2 eingeschoben bzw. mit Hilfe eines Zugdrahts in den Schlauch 2 hineingezogen. Hierbei erfolgt vorzugsweise keine Fixierung des elektrischen Leiters 3 gegenüber der Schlauchwandung 2.2, sodass der elektrische Leiter 3 abgesehen von der freiendseitigen Halterung in den Schlauchabschlusselementen 4 gegenüber der Schlauchwandung 2.2 frei beweglich ist. Nach dem Einziehen des elektrischen Leiters 3 in den Schlauch 2 wird das bereits durch den Sicherungsring 8 am Leiterabschlusselement 5 vormontierte Isolierelement 7 durch einen weiteren Sicherungsring 8' gegenüber dem Schlauchabschlusselement 4 gesichert, sodass die Leitungsanordnung 1 an einem freien Ende fertig montiert ist. Anschließend wird auf dem weiteren freien Ende auf das Leiterabschlusselement 5 das Isolierelement 7 aufgeschoben und dieses durch Einbringen der Sicherungsringe 8, 8' gegenüber dem Schlauchabschlusselement 4 gesichert.

Nach der Montage erfolgt eine Dichtheitsprüfung der Leitungsanordnung 1 sowie eine Spülung mit einem Fluid, sodass durch die Montage in dem Fluidkanal enthaltene Fremdpartikel bzw. Fremdstoffe ausgespült werden. Danach wird eine elektrische Leitfähigkeitsprüfung zwischen den beiden Leiterabschlusselementen 5, d.h. insbesondere eine Leitfähigkeitsprüfung zwischen den beiden Übergängen Leiterabschlusselement 5 und elektrisch leitfähigen Kern 3.1 sowie eine Isolationsprüfung der Schlauchabschlusselemente 4 gegenüber den Leiterabschlusselementen 5 durchgeführt.

### Bezugszeichenliste

- 1: Leitungsanordnung
- 2: Schlauch
- 2.1: Schlauchinnenraum
- 2.2: Schlauchwandung
- 2.2.1: erste Schlauchwandungsschicht
- 2.2.2: zweite Schlauchwandungsschicht
- 2.2.3: dritte Schlauchwandungsschicht
- 3: elektrischer Leiter
- 3.1: Kern
- 3.2: Isolierung
- 4: Schlauchabschlusselement
- 4.1: Presshülsenabschnitt
- 4.1.1: Hülsenabschnitt
- 4.1.2: Presshülse
- 4.2: Verbindungsabschnitt
- 4.2.1: Dichtfläche
- 4.2.2: Dichtung
- 4.3: Überwurfmutter
- 4.3.1: Steg
- 5: Leiterabschlusselement
- 5.1: Innenöffnung
- 5.2: Wandungsabschnitt
- 5.3: Vorsprung
- 6: Isolationsmittel
- 7: Isolierelement
- 7.1: Fluidkanal
- 8, 8': Sicherungsring
- dₐ: Außendurchmesser
- dᵢ: Innendurchmesser
- LA: Längsachse

## Patentansprüche

1. Leitungsanordnung zur Übertragung elektrischer Energie hoher Leistung und eines unter Druck stehenden Fluids umfassend einen Schlauch (2) mit einem Schlauchinnenraum (2.1), einen elektrischen Leiter (3), zumindest ein Schlauchabschlusselement (4) mit einem Schlauchabschlusselementinnenraum und zumindest ein elektrisch leitfähiges Leiterabschlusselement (5), wobei der elektrische Leiter (3) zumindest teilweise im Schlauchinnenraum (2.1) aufgenommen ist, wobei im Schlauchinnenraum (2.1) ein Fluidkanal ausgebildet ist, wobei das Leiterabschlusselement (5) freiendseitig am elektrischen Leiter (3) angeordnet und beabstandet zum Schlauchabschluss-element (4) im Schlauchabschlusselementinnenraum befestigt ist, **dadurch gekennzeichnet, dass** zumindest im Übergangsbereich zwischen elektrischem Leiter (3) und Leiterabschlusselement (5) Isolationsmittel (6) vorgesehen sind, die den elektrischen Leiter (3) und das Leiterabschlusselement (5) umfangsseitig umschließen.

2. Leitungsanordnung nach Anspruch 1, **dadurch gekennzeichnet, dass** der elektrische Leiter (3) zumindest einen elektrisch leitenden Kern (3.1) in Form einer Litze oder eines Drahtes und eine diesen Kern (3.1) umgebende fluidresistente Isolierung (3.2) aufweist.

3. Leitungsanordnung nach Anspruch 1 oder 2, **dadurch gekennzeichnet, dass** der Schlauch (2) ein druckbeständiger Schlauch (2) mit einer Schlauchwandung (2.2) ist, die ein elektrisch leitfähiges Gewebe aufweist.

4. Leitungsanordnung nach einem der vorhergehenden Ansprüche, **dadurch gekennzeichnet, dass** das Schlauchabschlusselement (4) zumindest abschnittsweise hülsenförmig und/oder als Presshülse ausgebildet ist.

5. Leitungsanordnung nach Anspruch 3 oder 4, **dadurch gekennzeichnet, dass** das Schlauchabschlusselement (4) elektrisch leitfähig und elektrisch leitend mit dem Gewebe des Schlauchs (2) verbunden ist.

6. Leitungsanordnung nach einem der vorhergehenden Ansprüche, **dadurch gekennzeichnet, dass** die im Übergangsbereich zwischen dem elektrischen Leiter (3) und dem Leiterabschlusselement (5) vorgesehenen Isolationsmittel (6) durch einen Schrumpfschlauch oder ein Formstück gebildet sind.

7. Leitungsanordnung nach einem der vorhergehenden Ansprüche, **dadurch gekennzeichnet, dass** das Leiterabschlusselement (5) durch ein elektrisch nichtleitendes Isolierelement (7) zentriert im Schlauchabschlusselementinnenraum gehalten ist und/oder lösbar im Schlauchabschlusselement (5) befestigt ist.

8. Verfahren zur Herstellung einer Leitungsanordnung zur Übertragung elektrischer Energie hoher Leistung und eines unter Druck stehenden Fluids umfassend das Bereitstellen eines Schlauchs (2) mit einer Schlauchwandung (2.2) und einem Schlauchinnenraum (2.1), zumindest eines elektrischen Leiters (3), zumindest eines Schlauchabschlusselements (4) und zumindest eines elektrisch leitfähigen Leiterabschlusselements (5), bei dem das Leiterabschlusselement (5) am freien Ende des elektrischen Leiters (3) und das Schlauchabschlusselement (4) freiendseitig an der Schlauchwandung (2.2) angeordnet wird, dass der elektrische Leiter (3) in den Schlauchinnenraum (2.1) eingebracht wird und dass das Leiterabschlusselement (5) beabstandet zum Schlauchabschlusselement (4) im Schlauchabschlusselementinnenraum angeordnet wird, **dadurch gekennzeichnet, dass** das Leiterabschlusselement (5) im Schlauchabschlusselement (4) durch ein Isolierelement (7) fixiert wird.

9. Verfahren nach Anspruch 8, **dadurch gekennzeichnet, dass** das Leiterabschlusselement (5) lösbar mit dem Schlauchabschlusselement (4) verbunden wird.

10. Verfahren nach Anspruch 8 oder 9, **dadurch gekennzeichnet, dass** ein Schlauch (2) mit einem elektrisch leitfähigen Gewebe in der Schlauchwandung (2.2) und ein elektrisch leitfähiges Schlauchabschlusselement (4) verwendet wird und dass das Schlauchabschlusselement (4) elektrisch leitend mit dem elektrisch leitfähigen Gewebe verbunden und/oder verpresst wird.

11. Verfahren nach einem der Ansprüche 8 bis 10, **dadurch gekennzeichnet, dass** der elektrische Leiter (3) auf eine Länge größer der Länge des Schlauchs (2) abgelängt wird.

12. Verfahren nach einem der Ansprüche 8 bis 11, **dadurch gekennzeichnet, dass** als Schlauch (2) ein Hydraulikschlauch und als elektrischer Leiter (3) ein Kabel mit fluidresistenter Isolierung (3.2) verwendet wird.

13. Verfahren nach einem der Ansprüche 8 bis 12, **dadurch gekennzeichnet, dass** der elektrische Leiter (3) zumindest im Übergangsbereich zwischen elektrischem Leiter (3) und Leiterabschlusselement (5) abisoliert wird.

## Claims

1. A line arrangement for transmitting high-power electrical energy and a pressurised fluid, comprising a hose (2) with a hose interior (2.1), an electrical conductor (3), at least one hose-terminating element (4) with a hose-terminating element interior, and at least one electrically-conductive conductor-terminating element (5), wherein the electrical conductor (3) is at least partially accommodated in the hose interior (2.1), wherein a fluid passage is designed in the hose interior (2.1), wherein the conductor-terminating element (5) is arranged on the electrical conductor (3) at the free end, and is attached in the hose-terminating element interior, spaced apart from the hose-terminating element (4), **characterised in that**, insulation means (6) are provided, at least in the transition region between the electrical conductor (3) and the conductor-terminating element (5); the insulation means circumferentially enclosing the electrical conductor (3) and the conductor-terminating element (5).

2. Line arrangement according to claim 1, **characterised in that**, the electrical conductor (3) has at least one electrically-conducting core (3.1) in the form of a braid or a wire and has a fluid-resistant insulation (3.2) surrounding said core (3.1).

3. Line arrangement according to claim 1 or 2, **characterised in that**, the hose (2) is a pressure-resistant hose (2) with a hose wall (2.2) having an electrically-conductive fabric.

4. Line arrangement according to one of the preceding claims, **characterised in that**, at least sections of the hose-terminating element (4) are designed in the form of a sleeve and/or a compressive ferrule.

5. Line arrangement according to claim 3 or 4, **characterised in that**, the hose terminating-element (4) is electrically conductive and is connected with the fabric of the hose (2) in an electrically-conducting manner.

6. Line arrangement according to one of the preceding claims, **characterised in that**, the insulation means (6) provided in the transition region between the electrical conductor (3) and the conductor-terminating element (5) are formed by a shrink-on tube or a moulded part.

7. Line arrangement according to one of the preceding claims, **characterised in that**, the conductor-terminating element (5) is held centred in the hose-terminating element interior by means of an electrically non-conducting insulation element (7) and/or is detachably attached in the hose terminating-element (5).

8. A method for the manufacture of a line arrangement for transmitting high-power electrical energy and a pressurised fluid, comprising the provision of a hose (2) with a hose wall (2.2) and a hose interior (2.1), at least one electrical conductor (3), at least one hose-terminating element (4) and at least one electrically-conductive conductor-terminating element (5), wherein the conductor-terminating element (5) is arranged at the free end of the electrical conductor (3) and the hose-terminating element (4) is arranged on the hose wall (2.2) at the free end, such that the electrical conductor (3) is introduced into the hose interior (2.1) and the conductor-terminating element (5) is arranged in the hose-terminating element interior spaced apart from the hose-terminating element (4), **characterised in that**, the conductor-terminating element (5) is fixed in the hose-terminating element (4) by means of an insulation element (7).

9. Method according to claim 8, **characterised in that**, the conductor-terminating element (5) is detachably connected with the hose-terminating element (4).

10. Method according to claim 8 or 9, **characterised in that**, a hose (2) with an electrically-conductive fabric in the hose wall (2.2) and an electrically-conductive hose-terminating element (4) are used, and **in that** the hose-terminating element (4) is connected and/or grouted with the electrically-conductive fabric in an electrically conducting manner.

11. Method according to one of the claims 8 to 10, **characterised in that**, the electrical conductor (3) is cut to a length that is greater than the length of the hose (2).

12. Method according to one of the claims 8 to 11, **characterised in that**, an hydraulic hose is used as the hose (2), and a cable with fluid-resistant insulation (3.2) is used as the electrical conductor (3).

13. Method according to one of the claims 8 to 12, **characterised in that**, the insulation is removed from the electrical conductor (3) at least in the transition region between the electrical conductor (3) and the conductor-terminating element (5).

## Revendications

1. Dispositif conducteur pour le transfert d'énergie électrique de haute puissance et d'un fluide sous pression, comprenant un tuyau (2) doté d'une cellule interne de tuyau (2.1), un conducteur électrique (3), au moins un élément terminal de tuyau (4) doté d'une cellule interne d'élément terminal de tuyau et au moins un élément terminal conducteur d'électricité (5), le conducteur électrique (3) étant reçu du moins partiellement dans la cellule interne de tuyau (2.1), un canal à fluide étant constitué dans la cellule interne de tuyau (2.1), l'élément terminal conducteur (5) étant disposé sur le conducteur électrique (3) au niveau de son extrémité libre et fixé espacé par rapport à l'élément terminal de tuyau (4) dans la cellule interne de l'élément terminal de tuyau, **caractérisé en ce qu'**il est prévu, du moins dans la zone de transition entre le conducteur électrique (3) et l'élément terminal conducteur (5), des moyens d'isolation (6) qui entourent le conducteur électrique (3) et l'élément terminal conducteur (5) sur leur circonférence.

2. Dispositif conducteur selon la revendication 1, **caractérisé en ce que** le conducteur électrique (3) présente au moins un noyau conducteur d'électricité (3) ayant la forme d'un toron et d'un isolant (3.2) résistant au fluide entourant ce noyau (3.1).

3. Dispositif conducteur selon la revendication 1 ou 2, **caractérisé en ce que** le tuyau (2) est un tuyau résistant à la pression (2) ayant une paroi de tuyau (2.2) qui comporte un textile conducteur d'électricité.

4. Dispositif conducteur selon une des revendications précédentes, **caractérisé en ce que** l'élément terminal de tuyau (4) est réalisé du moins par endroits en forme de manchon et/ou sous forme de douille de sertissage.

5. Dispositif conducteur selon la revendication 3 ou 4, **caractérisé en ce que** l'élément terminal de tuyau (4) est conducteur d'électricité et relié sous conduction électrique au textile du tuyau (2).

6. Dispositif conducteur selon une des revendications précédentes, **caractérisé en ce que** les moyens d'isolation (6) prévus dans la zone de transition entre le conducteur électrique (3) et l'élément terminal conducteur (5) sont constitués par un tuyau rétracté ou une pièce moulée.

7. Dispositif conducteur selon une des revendications précédentes, **caractérisé en ce que** l'élément terminal conducteur (5) est maintenu centré par un élément isolant non conducteur d'électricité (7) dans la cellule interne de l'élément terminal de tuyau et/ou est fixé de manière dissociable dans l'élément terminal de tuyau (5).

8. Procédé de fabrication d'un dispositif conducteur pour le transfert d'énergie électrique de haute puissance et d'un fluide sous pression, comprenant le fait de se procurer un tuyau (2) doté d'une paroi de tuyau (2.2) et d'une cellule interne de tuyau (2.1), au moins un conducteur électrique (3), au moins un élément terminal (4) et au moins un élément terminal conducteur d'électricité (5), dans lequel l'élément terminal conducteur (5) est disposé à l'extrémité libre du conducteur électrique (3) et l'élément terminal de tuyau (4) est disposé par son extrémité libre sur la paroi du tuyau (2.2), le conducteur électrique (3) est installé dans la cellule interne du tuyau (2.1) et l'élément terminal conducteur (5) est disposé à distance de l'élément terminal de tuyau (4) dans la cellule interne de l'élément terminal de tuyau, **caractérisé en ce que** l'élément terminal conducteur (5) est fixé dans l'élément terminal conducteur (5) dans l'élément terminal de tuyau (4) par un élément isolant (7).

9. Procédé selon la revendication 8, **caractérisé en ce que** l'élément terminal conducteur (5) est relié de manière dissociable à l'élément terminal de tuyau (4).

10. Procédé selon la revendication 8 ou 9, **caractérisé en ce qu'**on utilise un tuyau (2) comportant un textile conducteur d'électricité dans la paroi de tuyau (2.2) et un élément terminal de tuyau (4) conducteur d'électricité et que l'élément terminal de tuyau (4) est relié et/ou comprimé sous conduction électrique avec le textile conducteur d'électricité.

11. Procédé selon une des revendications 8 à 10, **caractérisé en ce que** conducteur électrique (3) est coupé à une longueur supérieure à la longueur du tuyau (2).

12. Procédé selon une des revendications 8 à 11, **caractérisé en ce qu'**on utilise comme tuyau (2) un tuyau hydraulique et comme conducteur électrique (3) un câble pourvu d'un isolant résistant au fluide (3.2).

13. Procédé selon une des revendications 8 à 12, **caractérisé en ce que** le conducteur électrique (3) est dénudé au moins dans la zone de transition entre le conducteur électrique (3) et l'élément terminal conducteur (5).
